# EUROPÄISCHE PATENTSCHRIFT

(11) **EP 1 198 323 B1**
(45) Veröffentlichungstag und Bekanntmachung des Hinweises auf die Patenterteilung: **19.05.2004**
(21) Anmeldenummer: 00942092.8
(22) Anmeldetag: 17.06.2000
(51) Int. Cl.: B23K 33/00, B23K 20/12

(54) **REIBGESCHWEISSTES WELLE-SCHEIBE-VERBUNDWERKSTUCK UND VERFAHREN ZU SEINER HERSTELLUNG**
FRICTION-WELDED SHAFT-DISK ASSEMBLY AND METHOD FOR THE MANUFACTURE THEREOF
PIECE COMPOSITE ARBRE-DISQUE SOUDEE PAR FRICTION ET PROCEDE PERMETTANT DE LA PRODUIRE

(30) Priorität: 24.07.1999 DE 19934855
(43) Veröffentlichungstag der Anmeldung: 24.04.2002
(73) Patentinhaber: DaimlerChrysler AG, 70567 Stuttgart (DE)
(72) Erfinder: BENDER, Jens, D-70376 Stuttgart (DE); HENTRICH, Cornelius, D-71336 Waiblingen (DE); KÖLL, Jan, A-3701 Grossweikersdorf (AT); MAYER, Theodore, D-73061 Ebersbach (DE); PAASCH, Rudolf, D-70794 Filderstadt (DE); REINHARDT, Rudolf, D-73732 Esslingen (DE); ZECHMANN, Hans, D-71394 Kernen (DE)
(86) Internationale Anmeldenummer: PCT/EP2000/005587
(87) Internationale Veröffentlichungsnummer: WO 2001/007200

(56) Entgegenhaltungen:
- EP-A- 0 372 663
- DE-A- 2 735 074
- DE-A- 19 519 576
- PAVEY ET AL.: "aspects of the use of conical joints for friction welding applications" WELDING AND METAL FABRICATION, Bd. 40, Nr. 6, Juni 1972 (1972-06), Seiten 220-224, XP002148965

## Beschreibung

Die Erfindung betrifft ein Welle-Scheibe-Verbundwerkstück, das durch Reibschweißen gefügt ist, sowie ein Verfahren zu seiner Herstellung.

Im Fahrzeug- und Maschinenbau werden in zahlreichen Anwendungen Verbundwerkstükke eingesetzt, die aus einer Welle und einer im wesentlichen rotationssymmetrischen Scheibe zusammengesetzt sind. Beispiele solcher Scheiben sind Getriebe- und Kupplungsteile oder auch scheibenförmige Rohlinge, die noch mechanisch bearbeitet werden müssen.

Aus der EP 372 663 A1 ist ein Verfahren bekannt, mit Hilfe dessen eine Welle und eine Scheibe in einem Verbindungsbereich durch Reibschweißen verbunden werden können. Hierzu wird die Welle im Verbindungsbereich mit einer konischen bzw. gestuften Außenfläche versehen, während die Scheibe mit einem dem Verbindungsbereich auf der Welle entsprechenden konischen bzw. gestuften Durchgangsloch versehen wird. Diese Gestaltung des Verbindungsbereiches bewirkt eine Zentrierung der Welle gegenüber der Scheibe während des Reibschweißvorgangs. Beim Verschweißen der Welle mit der Scheibe treffen entweder zwei näherungsweise formnegative konische Einzelflächen aufeinander, so daß das reibgeschweißte Bauteil eine zusammenhängende konische Verbindungsfläche aufweist; oder es treffen mehrere radial benachbarte, in Axialrichtung versetzte ebene Ringflächen aufeinander, so daß eine aus mehreren ebenen Stufen zusammengesetzte Verbindungsfläche entsteht. In beiden Fällen entsteht ein großflächiger Verbindungsbereich, der näherungsweise frei von Hohlräumen ist.

Im Interesse der Gewichtsersparnis in Motoren, Getrieben etc. ist es vorteilhaft, Welle-Scheibe-Verbundwerkstücke einzusetzen, deren Wellen als Hohlwellen ausgeführt sind. Das in der EP 372 663 A1 beschriebene Verfahren, bei dem die Stufen bzw. der Konus im Verbindungsbereich dem Zentrieren der Welle relativ zur Scheibe dient und bei dem ein großflächiger Verbindungsbereich zwischen Welle und Scheibe entsteht, kann jedoch insbesondere bei dünnwandigen Hohlwellen nicht angewandt werden, da die Wandung der Hohlwelle durch die großflächige Erwärmung beim Reibschweißen so stark erweicht wird, daß beim Aufdrücken der Scheibe eine Verformung der Wellenwandung einsetzt; in dem Verfahren der EP 372 663 A1 kann daher die Hohlwelle der Scheibe im Verbindungsbereich keinen zur Schweißung ausreichenden Druckwiderstand zur entgegensetzen, und die Scheibe läßt sich über den Verbindungsbereich hinüberstreifen, anstatt eine ortsfeste steife Verbindung mit der Hohlwelle einzugehen.

Weiterhin besteht insbesondere bei schnell rotierenden Wellen, z.B. in Getrieben, die Notwendigkeit, weitere Gewichtsersparnis und ein geringes Massenträgheitsmoment gegenüber der Achse zu erreichen; somit besteht ein großer Bedarf an Welle-Scheibe-Verbundwerkstücken, die insbesondere auch in achsenfernen Bereichen, also auch im Bereich der Scheibe, gewichtsreduziert sind, wobei gleichzeitig eine hohe Gestaltfestigkeit der Welle-Scheibe-Verbindung gewährleistet sein muß.

Der Erfindung liegt daher die Aufgabe zugrunde, eine gegenüber dem Stand der Technik gewichtsreduziertes Welle-Scheibe-Verbundwerkstück vorzuschlagen, das ein geringes Massenträgheitsmoment gegenüber der Drehachse aufweist. Weiterhin liegt der Erfindung die Aufgabe zugrunde, ein Verfahren zur Herstellung eines solchen Verbundwerkstücks vorzuschlagen.

Die Aufgabe wird erfindungsgemäß durch die Merkmale der Ansprüche 1 und 10 gelöst.

Danach wird die Welle in einem Verbindungsbereich, in dem die Scheibe mit der Welle verschweißt werden soll, mit mehreren rotationssymmetrischen Stufen versehen, deren Durchmesser sich in einer Richtung der Achse zunehmend vergrößert. Andererseits wird die Scheibe im Bereich der Rotationsachse mit einem Durchgangsloch versehen; das Durchgangsloch ist so gestaltet, das es mehrere rotationssymmetrische Stege aufweist, die von der Scheibe zur Rotationsachse hin abragen. Die Innendurchmesser der Stege ist so gewählt, daß jeder Steg ein Durchgangsloch bildet, dessen Innendurchmesser um einen Schweißüberlapp kleiner ist als die diesem Steg in Zusammenbaulage gegenüberliegende Stufe im Verbindungsbereich der Welle. Die Scheibe wird durch Reibschweißen mit der Welle gefügt. Dabei werden die Stege mit den Stufen verbunden, und es entstehen im Bereich der Stege ringförmige Schweißnähte, die - in Abhängigkeit von der Größe des Schweißüberlapps - mehr oder weniger stark konisch geformt sind. Zwischen aufeinanderfolgenden Stegen entstehen dabei ringförmige Hohlräume.

Durch diese Hohlräume können erhebliche Gewichtseinsparungen gegenüber einem herkömmlichen, gefüllten Verbindungsbereich erzielt werden. Insbesondere kann dadurch das Massenträgheitsmoment des aus Welle und Scheibe aufgebauten Verbundwerkstücks stark reduziert werden. Durch die parallel zueinander liegenden ringförmigen Schweißnähte wird eine hohe Steifigkeit der Verbindung erreicht. Gute Schweißqualität ist gewährleistet, wenn der Schweißüberlapp der Stege gegenüber den Stufen etwa 1 mm bis 3 mm beträgt (siehe Anspruch 2); die in diesem Fall geformten Schweißnähte überdecken in Axialrichtung des Verbundstücks einen Bereich von 5 mm bis 15 mm und sind in konischer Weise leicht gegenüber der Axialrichtung des Verbundstücks gekippt.

Um eine größtmögliche Gewichtsersparnis des Verbundwerkstücks aus Welle und Scheibe zu erreichen, ist es vorteilhaft, die Welle als Hohlwelle auszugestalten (siehe Anspruch 7). Um - insbesondere bei Verwendung einer Hohlwelle mit geringer Wandstärke - während der Reibschweißung eine radiale Verwölbung der Hohlwelle in Richtung der Achse zu vermeiden, wird der Innenraum der Hohlwelle im Verbindungsbereich mit einem Stützelement versehen (siehe Anspruch 8), durch das Verformungen der Hohlwelle verhindert werden.

Eine besonders hohe Gewichtsersparnis und Reduktion des Massenträgheitsmoments wird erreicht, wenn die Scheibe aus einem konischen Blechteller und einem Stützrahmen zusammengesetzt ist, wobei der Stützrahmen mehrere ringförmige Stützstege aufweist, an denen der Blechteller befestigt ist (siehe Anspruch 4). Die Stützstege verleihen dem Blechteller Steifigkeit, während durch die zwischen den Stützstegen liegenden Hohlräume das Gewicht der Scheibe vermindert wird. Blechteller und Stützkonstruktion können dabei aus unterschiedlichen Werkstoffen bestehen (siehe Anspruch 6): So kann der Blechteller aus einem Kohlenstoffstahl gefertigt sein, der höchste Druck- und Reibungskräfte zu ertragen in der Lage ist, während die Stützkonstruktion aus einem geeigneten Leichtbauwerkstoff hergestellt ist. Zweckmäßigerweise werden die Stege des Stützrahmens durch Reibschweißen mit der ihnen gegenüberliegenden Wandung des Blechtellers durch Reibschweißen verbunden (siehe Anspruch 5).

Die in Zusammenbaulage zwischen den Stegen und der Außenwand der Welle gebildeten Hohlräume können zweckmäßigerweise zur Führung von flüssigen und gasförmigen Medien verwendet werden; insbesondere dienen sie zur radialen (Um-)Verteilung von Schmieröl oder Drucköl, das über Ölkanäle im Inneren der Welle geführt wird und an definierten Stellen in der Umgebung der Scheibe an die Außenfläche der Welle geleitet wird. Der ringförmige Hohlraum ermöglicht dabei eine wesentliche Vereinfachung in der Geometrie und in der Herstellung der Ölkanäle (siehe Ansprüche 3 und 11). Die gegenüberliegend paarweise Anordnung der Bohrungen vermindert Unwucht.

Das erfindungsgemäße Verfahren gestattet das Verbinden von Wellen mit Scheiben aus unterschiedlichen Werkstoffen. Insbesondere ermöglicht es ein sicheres Fügen eine Scheibe aus einem beliebigen reibschweißfähigen Werkstoff mit einer gehärteten Stahlwelle (siehe Anspruch 9). Somit können Scheibe und Welle separat fertigbearbeitet und je nach Bedarf gehärtet werden, bevor sie zu einem Verbundwerkstück zusammengefügt werden.

Im folgenden wird die Erfindung anhand mehrerer in den Zeichnungen dargestellter Ausführungsbeispiele näher erläutert; dabei zeigen:
- Fig. 1a: eine Ansicht einer Scheibe und einer Welle, die zu einem Welle-Scheibe-Verbundwerkstück gefügt werden sollen;
- Fig. 1b: eine Ansicht des reibgeschweißten Welle-Scheibe-Verbundwerkstücks;
- Fig. 1c: eine Ansicht des reibgeschweißten Welle-Scheibe-Verbundwerkstücks, gegenüber der Fig. 1b um 90 Grad um die Wellenachse gedreht;
- Fig. 1d: eine Detailansicht des in Figur 1b markierten Bereichs Id;
- Fig. 2a: eine Ansicht eines Verbundwerkstücks aus einer Scheibe und einer im Schweißbereich durch eine Kugel abgestützten Wandung der Hohlwelle;
- Fig. 2b: eine Detailansicht eines Verbundwerkstücks aus einer Scheibe und einer im Schweißbereich durch ein Zylinderstück abgestützten Hohlwelle, gemäß dem in Figur 2a markierten Ausschnitt IIb;
- Fig. 3: eine Ansicht eines Verbundwerkstücks aus einer Scheibe und einer Hohlwelle mit rotierender Welle im Inneren des Verbundwerkstücks;
- Fig. 4: eine Ansicht eines Welle-Scheibe-Verbundwerkstücks mit gebauter Scheibe.

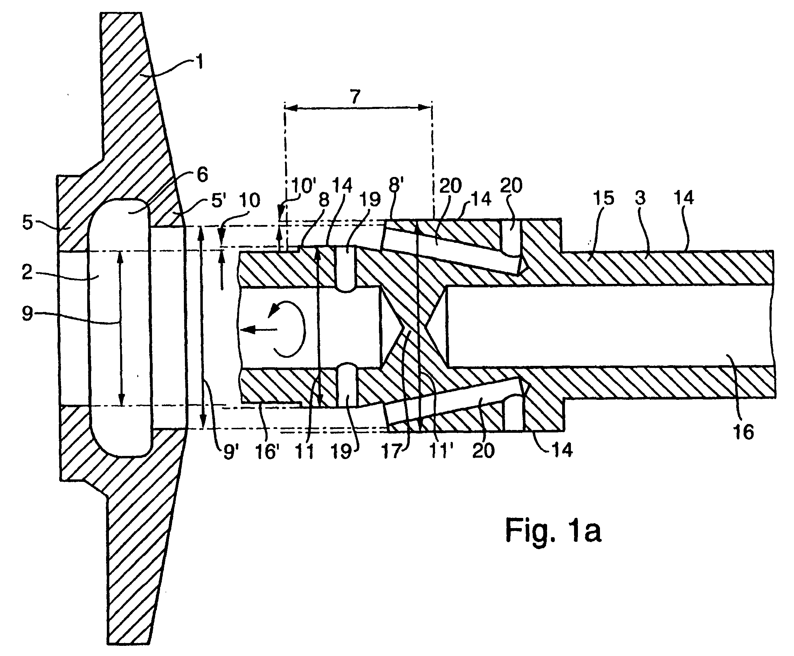

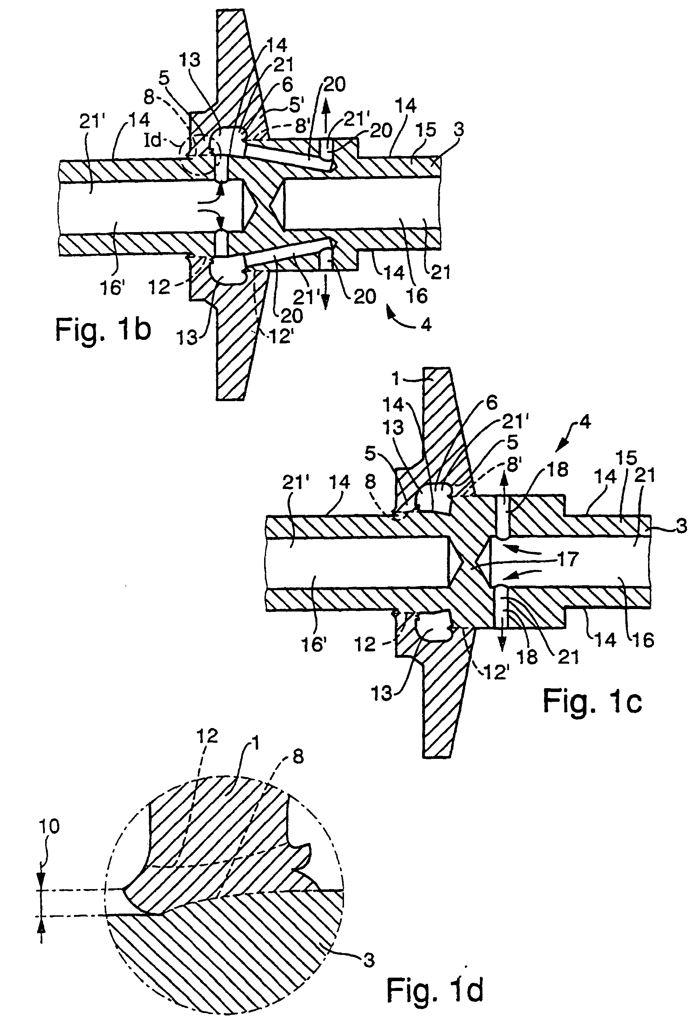

Figur 1 a zeigt eine rotationssymmetrische Scheibe 1 mit einem Durchgangsloch 2 und eine Welle 3, die gemeinsam zu einem in Figuren 1b und 1c dargestellten Welle-Scheibe-Verbundwerkstück 4 zusammengefügt werden sollen. Die Scheibe 1 weist im Bereich des Durchgangslochs 2 zwei ringförmige, der Welle 3 zugewandte Stege 5,5' auf, die eine ringförmige Aussparung 6 einschließen. Die Welle 3 weist in einem Verbindungsbereich 7 zwei Stufen 8,8' auf, die beim Zusammenbau von Welle 3 und Scheibe 1 mit den Stegen 5,5' der Scheibe 1 so verbunden werden, daß die Stufe 8 mit dem Steg 5 und die Stufe 8' mit dem Steg 5' zusammentrifft.

Der Innendurchmesser 9 des Stegs 5 ist um einen Schweißüberlapp 10 kleiner als der Außendurchmesser 11 der Stufe 8, und der Innendurchmesser 9' des Stegs 5' ist um einen Schweißüberlapp 10' geringer als der Außendurchmesser der Stufe 8', so daß Welle 3 und Scheibe 1 vor dem Zusammenbau im Bereich dieser Stege 5,5' bzw. Stufen 8,8' radial überlappen.

Scheibe 1 und Welle 3 werden durch Reibschweißen miteinander verbunden. Dabei wird z.B., wie in Figur 1 a durch den Pfeil angedeutet, die Welle 3 in Rotation versetzt und axial so weit in Richtung der (stationären) Scheibe 1 verschoben, bis die Stufen 8,8' der Welle 3 mit den Stegen 5,5' der Scheibe 1 in Berührung kommen und dabei eine lokale Aufheizung der Stege 5,5' und der Stufen 8,8' in den gegenseitigen Berührungsbereichen bewirken. Hierbei erfolgt eine Erweichung und Verformung der Stege 5,5' und der Stufen 8,8' in der Umgebung der gegenseitigen Berührungsbereiche; dadurch entsteht eine Fügezone 12, die - wie in der Detaildarstellung der Figur 1 d schraffiert dargestellt - schräg zur Wellenachse verläuft. Beim Fügen der Welle 3 mit der Scheibe 1 entsteht eine feste, dichte Verbindung der Stege 5,5' mit den Stufen 8,8', so daß durch die Aussparung 6 zwischen den Stegen 5,5' ein geschlossener ringförmiger Hohlraum 13 gebildet wird, der einerseits durch die Aussparung 6 der Scheibe 1, andererseits durch die Außenwand 14 der Welle 3 begrenzt wird.

Für Anwendungen im Motoren- und Getriebebereich bestehen Welle 3 und Scheibe 1 typischerweise aus Stahlwerkstoffen. Das Reibschweißen gestattet jedoch auch das Fügen von Werkstücken unterschiedlicher Materialien und insbesondere auch das Fügen gehärteter Fügestellen. So kann können Welle 3 und Scheibe 1 aus unterschiedlichen Werkstoffen bestehen, oder die Welle 3 kann im Verbindungsbereich 7 bereits vor dem Fügen gehärtet werden.

Figuren 1b und 1c zeigen das geschweißte Welle-Scheibe-Verbundwerkstück 4, wobei die Ansicht der Figur 1c gegenüber der Ansicht der Figur 1b um 90 Grad um die Wellenachse gedreht ist. Die Welle 3 ist eine Vollwelle 15, die u.a. aus Gründen der Gewichtsersparnis mit zwei gebohrten Innenräumen 16,16' versehen ist. Zwischen den Innenräumen 16,16' befindet sich ein Trennsteg 17, der die beiden Innenräume 16,16' voneinander trennt und abstützt. Im vorliegenden Beispiel ist der rechts des Trennstegs 17 gelegene Innenraum 16 über eine Austrittsöffnung 18 mit der Außenwand 14 der Welle 3 verbunden. Der links des Trennstegs 17 gelegene Innenraum 16' ist über eine Verbindungsbohrung 19 mit dem geschlossenen ringförmigen Hohlraum 13 verbunden, welcher seinerseits mit einer Austrittsöffnung 20 zur Außenwand 14der Welle 3 versehen ist. Die beiden Innenräume 16,16,' bilden somit Teile zweier unabhängiger, in Axialrichtung der Welle 3 überlappender Medienkanäle 21,21', in denen z.B. Drucköl geführt werden kann. Über diese Medienkanäle 21,21' können an den Austrittsöffnungen 18,20 unterschiedliche Drücke auf (in Figuren 1b und 1c nicht dargestellte) Anschlußelemente ausgeübt werden, die mit der Welle 3 fest oder axial verschiebbar verbunden sind. Statt zur Führung von Drucköl können die Medienkanäle 21,21' auch zur Führung bzw. Verteilung beliebiger anderer Medien wie z.B. Schmieröl, Druckluft, Kühlmedien etc. entlang des Welle-Scheibe-Verbundwerkstücks 4 genutzt werden. Durch die symmetrische Anordung der Medienkanäle 21,21' in bezug auf die Drehachse können Unwuchten vermindert werden.

Die Austrittsöffnungen 18,20 und die Verbindungsbohrung 19 können - wie in Figur 1a gezeigt - bereits vor dem Fügen von Welle 3 und Scheibe 1 in die Welle 3 eingebracht werden. Durch das Reibschweißen der Stufen 8,8' auf der Welle 3 und der Stege 5,5' auf der Scheibe 1 im entsteht im Verbindungsbereich 7 der ringförmige Hohlraum 13, der zusammen mit der Austrittsöffnung 20, der Verbindungsbohrung 19 und dem Innenraum 16' den Medienkanal 21' bildet.

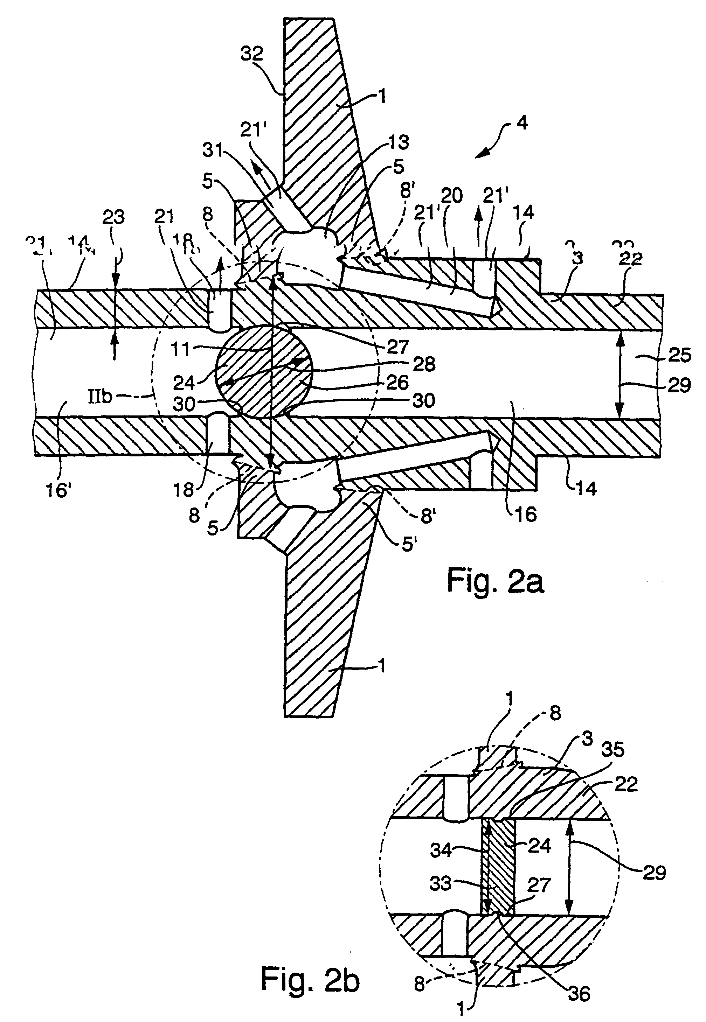

Figur 2a zeigt ein Welle-Scheibe-Verbundwerkstück 4, das aus einer als Hohlwelle 22 gestalteten Welle 3 und einer Scheibe 1 gebaut ist. Zur Befestigung der Scheibe 1 mittels Reibschweißen wird - analog zu dem in Figur 1 a gezeigten Ausführungsbeispiel - die Außenwand 14 der Hohlwelle 22 mit zwei Stufen 8,8' versehen, mit denen die Stege 5,5' der Scheibe 1 verbunden werden. Die Stufen 8,8' auf der Hohlwelle 22 können durch Querwalzen, Querfließpressen oder durch spanende Bearbeitung der Hohlwelle 22 hergestellt werden.

Aus Gründen der Gewichtsersparnis ist es oft vorteilhaft, die Wandstärke der Hohlwelle 22 so gering wie möglich zu wählen. Im Bereich der Stufe 8 mit dem kleineren Außendurchmesser 11 (siehe hierzu Figur 1a) liegt dabei eine besonders kleine Wandstärke 23 der Hohlwelle 22 vor. Zur Abstützung dieser Stufe 8 wird ein Stützelement 24 so im Innenraum 25 der Hohlwelle 22 positioniert, daß es der Stufe 8 - und somit der bezüglich des Reibschweißprozesses schwächsten Stelle der Hohlwelle 22 - gegenüberliegt. Das Stützelement 24 verhindert, daß die Hohlwelle 22 sich während des Reibschweißens im Bereich der Stufe 8 nach innen wölbt und stellt somit sicher, daß auch bei dünnwandigen Hohlwellen 22 die benötigten Reibkräfte zum Verschweißen der Stufen 8,8' auf der Welle 3 und der Stege 5,5' auf der Scheibe 1 aufgebracht werden können.

Figur 2a zeigt ein Ausführungsbeispiel, in dem das Stützelement 24 als Kugel 26 ausgebildet ist, die vor dem Reibschweißen in den der Stufe 8 gegenüberliegenden Bereich 27 des Innenraums 25 der Hohlwelle 22 gepreßt wird. Der Außendurchmesser 28 der Kugel 26 ist hierbei dem Innendurchmesser 29 der Hohlwelle 22 angepaßt. Beim Reibschweißen des Stegs 5 mit der Stufe 8 entstehen durch die plastische Verformung der verhältnismäßig dünnwandigen Hohlwelle 8 ringförmige Wulste 30 in der Umgebung der eingepreßten Kugel 26, durch die nach dem Erkalten des Welle-Scheibe-Verbundstücks 4 ein fester, dichter Sitz der Kugel 26 im Innenraum 25 der Hohlwelle 22 bewirkt wird. Der Innenraum 25 der Hohlwelle 22 wird daher durch die Kugel 26 in zwei getrennte Innenbereiche 16 und 16' geteilt. Durch gebohrten Austrittsöffnungen 18 ist der links der Kugel 26 liegende Innenbereich 16' mit der Außenwand 14 der Hohlwelle 22 verbunden und bildet somit einen Medienkanal 21, der z.B. zur Zuführung von Schmier- oder Drucköl an Lager oder Hohlräume verwendet werden kann, die die Außenwand 14 der Hohlwelle 22 im Bereich der Austrittsöffnungen 18 mit (in Figur 2a nicht dargestellten) Gegenstücken bildet. Der rechts der Kugel 26 liegende Innenbereich 16 ist durch die Kugel 26 gegenüber dem links liegenden Innenbereich 16' getrennt. Der ringförmige Hohlraum 13 stellt Teil eines weiteren Medienkanals 21' dar, der durch die Austrittsöffnung 20 mit der rechts der Scheibe 1 befindlichen Außenwand 14 der Hohlwelle 22 und durch die Einlaßöffnung 31 auf der Scheibe 1 mit dem links des Steges 5 befindlichen Außenbereich 32 der Scheibe 1 verbunden ist. Dieser Medienkanal 21' bewirkt somit eine axiale Überbrückung der Scheibe 1 im Inneren des Welle-Scheibe-Verbundwerk-stücks 4.

Alle zur Realisierung der Medienkanäle 21,21' benötigten Einlaß- und Austrittsöffnungen 18,20,31 können vor dem Verschweißen auf der Scheibe 1 bzw. der Welle 3 angebracht werden, ohne daß dadurch beim Fügen auf eine genaue meridiale Zuordnung von Scheibe 1 und Welle 3 geachtet werden braucht: Da der Hohlraum 13 eine radialsymmetrische Ringform hat, ist es nämlich gleichgültig, an welcher meridialen Position gegenüber der Austrittsöffnung 20 auf der Welle 3 die Einlaßöffnung 31 auf der Scheibe 1 positioniert ist, da unabhängig von der gegenseitigen Positionierung von Welle 3 und Scheibe 1 immer ein durchgängiger Medienkanal 21' gebildet wird. Während dem Reibschweißvorgang kann - je nachdem, ob die Scheibe 1 gegenüber der Welle 3 rotiert wird oder umgekehrt - die Austrittsöffnung 20 auf der Welle 3 oder die Einlaßöffnung 31 auf der Scheibe 1 zur Zuleitung von Schutzgas verwendet werden.

In dem in Figur 2b gezeigten Ausschnitt des Welle-Scheibe-Verbundwerkstücks 4 ist das Stützelement 24 ein Zylinderstück 33 mit einem dem Innendurchmesser 29 der Hohlwelle 22 angepaßten Außendurchmesser 34, das vor dem Reibschweißen in den der Stufe 8 gegenüberliegenden Bereich 27 des Innenraums 25 der Hohlwelle 22 eingepreßt wird. Um im Bereich der Stufe 8 den gesamten Reibschweißbereich abzudecken, entspricht die Dicke des Zylinderstücks 33 näherungsweise der Dicke des mit der Stufe 8 zu fügenden Stegs 5 auf der Scheibe 1. Die Außenwand 35 des Zylinderstücks 33 ist mit einer umlaufenden ringförmigen Nut 36 versehen, in die durch die plastische Verformung der Hohlwelle 22 während des Reibschweißprozesses Hohlwellen-Werkstoff eindringt und einen festen Sitz des Zylinderstücks 33 im Innenraum 25 der Hohlwelle 22 nach dem Abkühlen sicherstellt. Eine weitere Gewichtseinsparung kann erreicht werden, wenn das Zylinderstück 33 aus einem Leichtbau-Material, z.B. Aluminium, hergestellt ist.

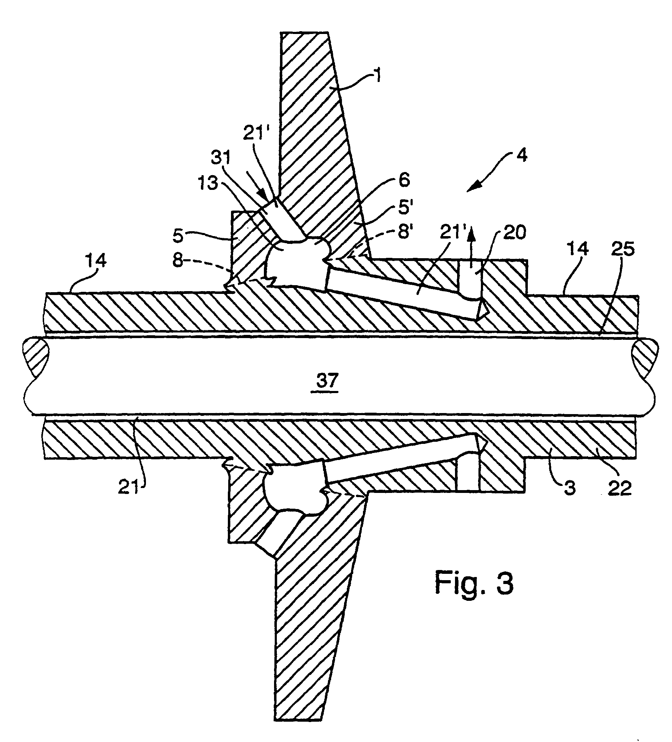

Figur 3 zeigt ein weiteres Ausführungsbeispiel eines Welle-Scheibe-Verbundwerkstück 4, bestehend aus einer Hohlwelle 22 und einer Scheibe 1. Durch den Innenraum 25 der Hohlwelle 22 ist eine rotierende Innenwelle 37 geführt, deren Außendurchmesser kleiner ist als der Innendurchmesser der Hohwelle 22, so daß die innenwelle 37 gegenüber der Hohlwelle 22 berührungsfrei rotieren kann. Analog zum Beispiel der Figur 1 b weist auch hier die Scheibe 1 zwei Stege 5,5' auf, im Bereich derer die Scheibe 1 mit den Stufen 8,8' der Welle 3 verbunden ist. Zwischen den Stegen 5,5' weist die Scheibe eine ringförmige Aussparung 6 auf, durch die - nach dem Verschweißen von Welle 3 und Scheibe 1 - ein ringförmiger Hohlraum 13 zwischen Scheibe 1 und Außenwand 14 der Hohlwelle 22 gebildet wird. Das Welle-Scheibe-Verbundwerkstück 4 weist einen Medienkanal 21' auf, der analog zum Ausführungsbeispiel der Figur 2a gestaltet ist und somit die Einlaßöffnung 31 auf der Scheibe 1, den ringförmigen Hohlraum 13 und die Austrittsöffnung 20 auf der Hohlwelle 3 umfaßt. Wird der Innenraum 25 der Hohlwelle 22 nicht zur Führung einer Innenwelle 37 benötigt, so kann der Innenraum 25 auch als weiterer Medienkanal 21 verwendet werden, durch den z.B. Schmieröl entlang der Hohlwelle 22 geführt bzw. verteilt wird.

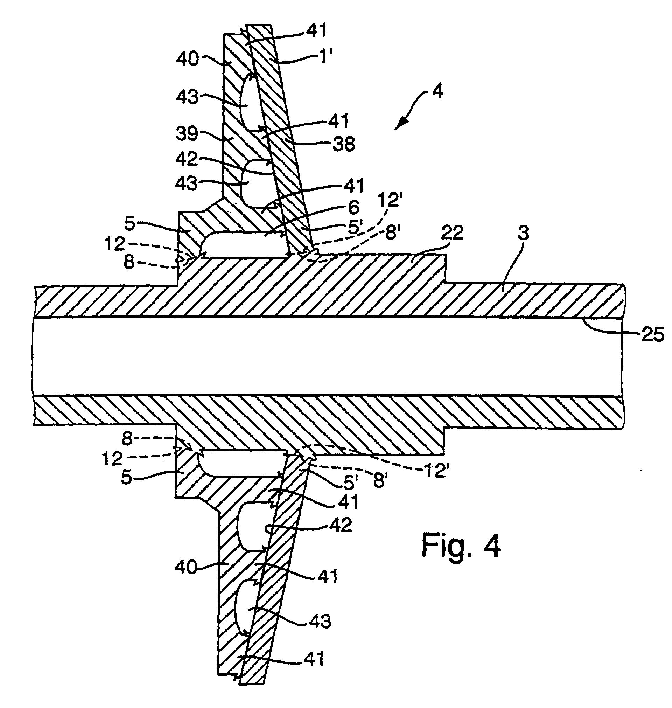

Figur 4 schließlich zeigt ein Welle-Scheibe-Verbundwerkstück 4 aus einer Welle 3 und einer Scheibe 1, wobei die hier dargestellte Scheibe 1' aus einem konischen Blechteller 38 und einem Stützrahmen 39 besteht. Der Stützrahmen 39 umfaßt einen rotationssymmetrischen scheibenförmigen Teller 40, von dem mehrere ringförmige Stützstege 41 näherungsweise in Axialrichtung abragen und durch Reibschweißen mit der ihnen gegenüberliegenden Rückwand 42 des Blechtellers 38 verbunden sind. Durch die Stützstege 41 entstehen zwischen der Rückwand 42 des Blechtellers 38 und dem Teller 40 des Stützrahmens 39 ringförmige Hohlräume 43, die eine erhebliche Gewichtseinsparung und Reduktion des Massenträgheitsmoments der hier dargestellten Scheibe 1' gegenüber den in den Figuren 1 bis 3 dargestellten Scheiben 1 aus Vollmaterial darstellen. Zum Einsatz des Welle-Scheibe-Verbundwerkstücks 4 in einem Getriebe besteht der Blechteller 38 aus einem hochfesten Material, das unempfindlich gegenüber abrasiven Kräften ist, z.B. aus einem Kohlenstoffstahl. Der Stützrahmen 39 mit den Stützstegen 41, an denen der Blechteller 38 in unterschiedlichen Abständen von der Rotationsachse radial umlaufend befestigt ist, verhindert eine Verformung des Blechtellers 38 unter den hohen auf ihn wirkenden Druck- und Schubkräften. Da durch Reibschweißen unterschiedliche Werkstoffe miteinander verbunden werden können, kann der Stützrahmen 39 zur weiteren Gewichtsersparnis aus einem Leichtbau-Werkstoff, z.B. Aluminium, gefertigt sein. Die so aus Blechteller 38und Stützrahmen 39 gefügte Scheibe 1' weist in dem der Rotationsachse der Welle 3 zugewandten Bereich zwei ringförmige Stege 5,5' auf, wobei der eine Steg 5 Teil des Stützrahmens 39 ist, während der andere Steg 5' durch den achsennahen Bereich des Blechtellers 38 gebildet ist. Zwischen den beiden Stegen 5,5' liegt eine ringförmige Aussparung 6 vor. Die Welle 3 ist mit zwei Stufen 8,8' versehen, mit denen die Stege 5,5' der Scheibe 1 - analog zu den oben beschriebenen Ausführungsbeispielen - durch Reibschweißen mit den Stufen 8,8' der Welle 3 verbunden werden, wobei schräge Fügezonen 12 gebildet werden.

Während in den gezeigten Ausführungsbeispielen die Verbindung zwischen Welle 3 und Scheibe 1 durch die Verbindung zweier Stege 5,5' mit zwei Stufen 8,8' gebildet wird, so daß zwischen den Stegen 5,5' und Stufen 8,8' ein einziger ringförmiger Hohlraum 13 entsteht, können im Allgemeinfall die Welle 3 und die Scheibe 1 im Verbindungsbereich 7 noch weitere Steg-Stufe-Verbindungen aufweisen. Dadurch entstehen weitere ringförmige Hohlräume 13, die zwischen der Scheibe 1 und der Außenwand der Welle 3 liegen.

## Patentansprüche

1. Welle-Scheibe-Verbundwerkstück
- bestehend aus einer metallischen Welle mit kreisförmigem Querschnitt, deren Außenwand in einem Verbindungsbereich mehrere Stufen aufweist, wobei der Durchmesser der Stufen sich in einer Richtung der Achse vergrößert,
- und einer im wesentlichen rotationssymmetrischen Scheibe mit einem Durchgangsloch im Bereich der Rotationsachse, das in Zusammenbaulage von Scheibe und Welle den Verbindungsbereich der Welle in Axialrichtung überdeckt,
- wobei Welle und Scheibe durch Reibschweißen miteinander verbunden sind,
**dadurch gekennzeichnet,**
- **daß** das Durchgangsloch (2) der Scheibe (1,1') mehrere rotationssymmetrische Stege (5,5') aufweist, deren Innendurchmesser (9,9') vor dem Verschweißen von Welle (3) und Scheibe (1,1') die Außendurchmesser (11,11') der ihnen in Zusammenbaulage gegenüberliegenden Stufen (8,8') auf der Welle (3) um einen Schweißüberlapp (10,10') unterschreiten,
- und **daß** die Stege (5,5') der Scheibe (1,1') mit den Stufen (8,8') der Welle (3) durch Reibschweißen verbunden sind, wodurch zwischen zwei benachbarten Stegen (5,5') ein ringförmiger Hohlraum (13) entsteht.

2. Verbundwerkstück nach Anspruch 1,
**dadurch gekennzeichnet,**
**daß** der Schweißüberlapp (10) zwischen 1 mm und 6 mm beträgt.

3. Verbundwerkstück nach Anspruch 1,
**dadurch gekennzeichnet,**
**daß** die Welle (3) mit Austrittsöffnungen (20) und/oder Verbindungsbohrungen (19) und/oder die Scheibe (1,1') mit Einlaßöffnungen (31) versehen ist, die in den ringförmigen Hohlraum (13) münden.

4. Verbundwerkstück nach Anspruch 1,
**dadurch gekennzeichnet,**
**daß** die Scheibe (1') aus einem konischen Blechteller (38) und einem Stützrahmen (39) besteht, wobei der Stützrahmen (29) mehrere ringförmige, näherungsweise in Axialrichtung abragende Stützstege (41) aufweist, an welchen der Blechteller (38) befestigt ist.

5. Verbundwerkstück nach Anspruch 4,
**dadurch gekennzeichnet,**
**daß** Blechteller (38) und Stützrahmen (39) durch Reibschweißen verbunden sind.

6. Verbundwerkstück nach Anspruch 4,
**dadurch gekennzeichnet,**
**daß** Blechteller (38) und Stützkonstruktion (39) aus unterschiedlichen Werkstoffen bestehen.

7. Verbundwerkstück nach Anspruch 1,
**dadurch gekennzeichnet,**
**daß** die Welle (3) eine Hohlwelle (22) ist.

8. Verbundwerkstück nach Anspruch 7,
**dadurch gekennzeichnet,**
**daß** der Innenraum (25) der Hohlwelle (22) im Verbindungsbereich (7) durch ein Stützelement (24) verschlossen ist.

9. Verbundwerkstück nach Anspruch 1,
**dadurch gekennzeichnet,**
**daß** die Welle (3) aus Stahl besteht und im Verbindungsbereich (7) gehärtet ist.

10. Verfahren zur Herstellung eines Welle-Scheibe-Verbundwerkstücks,
- bestehend aus einer metallischen Welle mit kreisförmigem Querschnitt, deren Außenwand in einem in definierter axialer Position befindlichen Verbindungsbereich mit mehreren Stufen versehen wird, deren Durchmesser sich in einer Richtung der Achse vergrößert,
- und einer im wesentlichen rotationssymmetrischen Scheibe mit einem Durchgangsloch im Bereich der Rotationsachse,
- wobei die Scheibe durch Reibschweißen auf der Welle befestigt wird,
**dadurch gekennzeichnet,**
- **daß** die Scheibe (1,1') im Bereich des Durchgangslochs (2) mit mehreren rotationssymmetrischen Stegen (5,5') versehen wird, deren Innendurchmesser (9,9') die Außendurchmesser (11,11') der ihnen im Verbindungsbereich (7) gegenüberliegenden Stufen (8,8') auf der Welle (3) um einen Schweißüberlapp (10,10') unterschreiten,
- und **daß** die Scheibe (1,1') während der Verschweißung unter Deformation der Stege (5,5') und der ihnen gegenüberliegenden Stufen (8,8') in der definierten axialen Position auf der Welle (3) befestigt wird.

11. Verfahren nach Anspruch 10,
**dadurch gekennzeichnet,**
**daß** die Welle (3) und die Scheibe (1,1') vor dem Verschweißen mit Einlaß- und/oder Austrittsöffnungen (18,20,31) für Medienkanäle (21,21') versehen wird, die in die Außenwand (14) der Welle (3) oder der Scheibe (1,1') münden.

## Claims

1. Shaft/disk composite component
- comprising a metallic shaft of circular cross-section with an external wall having several steps in a joint region, the diameter of the steps increasing in one direction of the axis,
- and an essentially dynamically balanced disk with a through-hole in the region of the axis of rotation, which overlaps the joint region of the shaft in the axial direction in the assembled state of disk and shaft,
- whereby shaft and disk are joined to one another by friction welding,
**characterised in that**
- the through-hole (2) of the disk (1, 1') has a plurality of dynamically balanced webs (5, 5'), the internal diameters (9, 9') of which fall short, by a welding overlap (10, 10'), of the external diameters (11, 11') of the steps (8, 8') on the shaft (3) which lie opposite them in the assembled state, before the shaft (3) and the disk (1, 1') are welded together
- and **in that** the webs (5, 5') of the disk (1, 1') are joined to the steps (8, 8') of the shaft (3) by friction welding, resulting in an annular cavity (13) between two adjacent webs (5, 5').

2. Composite component according to claim 1,
**characterised in that**
the welding overlap (10) measures between 1 mm and 6 mm.

3. Composite component according to claim 1,
**characterised in that**
the shaft (3) is provided with outlet openings (20) and/or connecting bores (19) and/or the disk (1, 1') is provided with inlet openings (31) terminating in the annular cavity (13).

4. Composite component according to claim 1,
**characterised in that**
the disk (1') consists of a conical sheet metal plate (38) and a supporting frame (39), the supporting frame (29) having a plurality of annular supporting webs (41) projecting approximately in the axial direction, to which the sheet metal plate (38) is attached.

5. Composite component according to claim 4,
**characterised in that**
the sheet metal plate (38) and the supporting frame (39) are joined by friction welding.

6. Composite component according to claim 4,
**characterised in that**
the sheet metal plate (38) and the supporting structure (39) are made of different materials.

7. Composite component according to claim 1,
**characterised in that**
the shaft (3) is a hollow shaft (22).

8. Composite component according to claim 7,
**characterised in that**
the interior (25) of the hollow shaft (22) is sealed by a supporting element (24) in the joint region (7).

9. Composite component according to claim 1,
**characterised in that**
the shaft (3) is made of steel and hardened in the joint region (7).

10. Method for the production of a shaft/disk composite component,
- comprising a metallic shaft of circular cross-section with an external wall having several steps in a joint region located in a defined axial position, the diameter of the steps increasing in one direction of the axis,
- and an essentially dynamically balanced disk with a through-hole in the region of the axis of rotation,
- whereby the disk is attached to the shaft by friction welding,
**characterised in that**
- the disk (1, 1') is provided with a plurality of dynamically balanced webs (5, 5') in the region of the through-hole (2), the internal diameters (9, 9') of which fall short, by a welding overlap (10, 10'), of the external diameters (11, 11') of the steps (8, 8') on the shaft (3) which lie opposite them in the joint region (7).
- and **in that** the disk (1, 1') is attached to the shaft (3) in the defined axial position during the welding process, while the webs (5, 5') and the steps (8, 8') lying opposite them are deformed.

11. Method according to claim 10,
**characterised in that**
prior to welding, the shaft (3) and the disk (1, 1') are provided with inlet and/or outlet openings (18, 20, 31) for fluid passages (21, 21') terminating in the external wall (14) of the shaft (3) or the disk (1, 1').

## Revendications

1. Pièce composite arbre-disque
- constituée d'un arbre métallique ayant une section transversale circulaire, dont la paroi extérieure présente, dans une zone de raccordement, plusieurs paliers, le diamètre des paliers augmentant dans une direction de l'axe,
- et constituée d'un disque pour l'essentiel symétrique à la rotation, doté d'un orifice traversant situé dans la zone de l'axe de rotation et qui, dans la position assemblée du disque et de l'arbre, recouvre la zone de raccordement de l'arbre dans la direction axiale,
- l'arbre et le disque étant raccordés l'un à l'autre par soudage par friction,
**caractérisée en ce que**
- l'orifice traversant (2) du disque (1, 1') présente plusieurs traverses (5, 5') symétriques à la rotation, dont les diamètres intérieurs (9, 9'), avant le soudage de l'arbre (3) et du disque (1, 1'), sont inférieurs d'un pli de soudure (10, 10') aux diamètres extérieurs (11, 11') des paliers (8, 8') de l'arbre (3) qui leur font face dans la position assemblée,
- et **en ce que** les traverses (5, 5') du disque (1, 1') sont reliées aux paliers (8, 8') de l'arbre (3) par soudage par friction, ce qui produit un espace creux annulaire (13) entre deux traverses voisines (5, 5').

2. Pièce composite selon la revendication 1, **caractérisée en ce que**, la dimension du pli de soudure (10) est comprise entre 1 mm et 6 mm.

3. Pièce composite selon la revendication 1, **caractérisée en ce que** l'arbre (3) est pourvu d'orifices de sortie (20) et/ou de perçages de raccordement (19) et/ou le disque (1, 1') est pourvu d'orifices d'entrée (31), qui débouchent dans l'espace creux annulaire (13).

4. Pièce composite selon la revendication 1, **caractérisée en ce que** le disque (1') se compose d'un plateau en tôle conique (38) et d'un cadre de support (39), le cadre de support (39) présentant plusieurs traverses de support (41) annulaires s'étendant approximativement en direction axiale, au niveau desquelles est fixé le plateau en tôle (38).

5. Pièce composite selon la revendication 4, **caractérisée en ce que** le plateau en tôle (38) et le cadre de support (39) sont raccordés par soudage par friction.

6. Pièce composite selon la revendication 4, **caractérisée en ce que** le plateau en tôle (38) et la structure de support (39) se composent de matériaux différents.

7. Pièce composite selon la revendication 1, **caractérisée en ce que** l'arbre (3) est un arbre creux (22).

8. Pièce composite selon la revendication 7, **caractérisée en ce que** l'espace intérieur (25) de l'arbre creux (22) est fermé dans la zone de raccordement (7) par un élément de support (24).

9. Pièce composite selon la revendication 1, **caractérisée en ce que** l'arbre (3) se compose d'acier et est trempé dans la zone de raccordement (7).

10. Procédé de fabrication d'une pièce composite arbre-disque,
- constituée d'un arbre métallique ayant une section transversale circulaire, dont la paroi extérieure est pourvue, dans une zone de raccordement se trouvant dans une position axiale définie, de plusieurs paliers, dont le diamètre augmente dans une direction de l'axe,
- et constituée d'un disque pour l'essentiel symétrique à la rotation, doté d'un orifice traversant présent dans la zone de l'axe de rotation,
- le disque étant fixé à l'arbre par soudage par friction,
**caractérisé en ce que**
- le disque (1, 1') est pourvu, dans la zone de l'orifice traversant (2), de plusieurs traverses (5, 5') symétriques à la rotation, dont les diamètres intérieurs (9, 9') sont inférieurs d'un pli de soudure (10, 10') aux diamètres extérieurs (11, 11') des paliers (8, 8') de l'arbre (3) qui leur font face dans la zone de raccordement (7),
- et **en ce que** le disque (1, 1'), pendant le soudage, par la déformation des traverses (5, 5') et des paliers (8, 8') qui leur font face, est fixé sur l'arbre (3) dans la position axiale définie.

11. Procédé selon la revendication 10, **caractérisé en ce que** l'arbre (3) et le disque (1, 1'), avant le soudage, sont pourvus d'orifices d'entrée et/ou de sortie (18, 20, 31) pour des canaux de fluide (21, 21'), qui débouchent dans la paroi extérieure (14) de l'arbre (3) ou du disque (1, 1').
